# FASCICULE DE BREVET EUROPEEN

(11) **EP 0 769 119 B1**
(45) Date de publication et mention de la délivrance du brevet: **05.12.2001**
(21) Numéro de dépôt: 95924358.5
(22) Date de dépôt: 23.06.1995
(51) Int. Cl.: F23C 7/02, F23L 7/00

(54) **Procédé pour réaliser une combustion dans un four**
Verfahren zur Durchführung einer Verbrennung in einem Offen
Method for carrying out a combustion in a furnace

(30) Priorité: 08.07.1994 FR 9408451
(43) Date de publication de la demande: 23.04.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: PHILIPPE, Louis, Oakbrook Terrace, IL 60181 (US); DUCHATEAU, Eric, Clarendon Hills, IL 60514 (US); JOUVAUD, Dominique, F-75015 Paris (FR); PLESSIER, Robert, F-78000 Versailles (FR); PIVARD, Claude, F-75015 Paris (FR); LEPOUTRE, Etienne, F-78100 Saint-Germain-en-Laye (FR)
(74) Mandataire: Vesin, Jacques
(86) Numéro de dépôt international: FR9500839
(87) Numéro de publication internationale: WO9601967

(56) Documents cités:
- US-A- 5 147 438
- US-A- 5 242 296
- PATENT ABSTRACTS OF JAPAN vol. 8 no. 160 (M-312) [1597] ,25 Juillet 1984 & JP,A,59 056605 (MIURA) 2 Avril 1984,

## Description

La présente invention concerne un procédé pour réaliser une combustion dans un four à l'aide d'au moins une paire de brûleurs (1) oxydant et combustible et au moins une lance (3) d'oxydant disposée entre les brûleurs (1) de ladite au moins une paire.

Les fours industriels, traditionnellement équipés d'aéro-brûleurs brûlant un mélange d'air et de combustible, ont récemment vu apparaître des oxybrûleurs, brûlant un mélange de combustible et d'oxydant, se substituant en tout ou partie aux aérobrûleurs classiques. Dans la présente demande, par "oxydant", on entend un mélange gazeux incorporant une teneur en oxygène notablement supérieure à celle de l'air, tels les mélanges parfois appelés "air suroxygéné", pour des teneurs en oxygène entre 40 et 70%, ou "oxygène impur" pour des teneurs en oxygène supérieures à 85%. Généralement, l'oxybrûleur se présente, à la façon de ces aérobrûleurs, sous la forme d'un dispositif individuel à éjection de fluides localisée, ce qui pose fréquemment des problèmes de profils de température et de transfert de chaleur dans la zone intéressée par la flamme de l'oxybrûleur.

Le brevet US-A-5,242,296 décrit un ensemble de brûleurs et de lance dans lequel une lance est associé à chaque brûleur.

La présente invention a pour objet de proposer une nouvelle conception d'ensemble de combustion de combustible et d'oxydant permettant de limiter les pics de température de flammes et les émissions d'oxydes d'azote et d'assurer un excellent transfert thermique dans un four.

Le procédé selon l'invention est caractérisé en ce que les brûleurs (1) de ladite au moins une paire ont les mêmes débits de combustible et d'oxydant, le débit total d'oxydant dans les brûleurs (1) et dans la lance (3) étant égal au débit théorique nécessaire pour une combustion complète du combustible plus un excès d'oxydant équivalent à une concentration molaire de 0.5% à 10% de molécules d'oxygène dans les produits de combustion secs, en ce que la distance entre deux axes de brûleurs est comprise entre 0,4m et 2m, en ce que l'axe de la lance est situé sensiblement à mi-distance entre les axes brûleurs, en ce que l'oxydant est fourni par une source qui comprend au moins 88%, typiquement de 90% à 95% d'oxygène et en ce que une même source (9) d'oxydant alimente les lignes d'oxydant de la paire de brûleurs (1) et la lance.

La lance peut être disposée de façon que l'axe de lance soit situé sensiblement à mi-distance entre les axes de brûleurs et forme typiquement avec ceux-ci un angle inférieur à 10% ;
- Les axes des brûleurs et de la lance peuvent être sensiblement coplanaires ;
- L'angle entre le plan des axes de l'ensemble de combustion monté dans la paroi de four et l'horizontale peuvent être compris entre -25 et +25°, typiquement entre -20 et +20°;
- Le four comporte deux paroi latérales opposées dont chacune peut comporter au moins un ensemble de combustion, les ensembles de combustion des parois opposées étant disposés sensiblement en vis-à-vis.
- Les brûleurs d'une même paire peuvent avoir les mêmes débits de combustibles et d'oxydant ;
- L'ensemble de combustion peut être alimenté par de l'oxydant en excès correspondant à une concentration molaire d'oxygène dans les produits de combustion secs comprise entre 0.5% et 10% ;
- L'impulsion (débit massique multiplié par la vitesse) de l'oxydant émis par la lance peut être compris entre 0.5 et 3 fois l'impulsion de flux d'oxydant et de combustible émis par un brûleur.

D'autres caractéristiques et avantages de la présente invention ressortiront de la description suivante de modes de réalisation, donnée à titre illustratif mais nullement limitatif, faite en relation avec les dessins annexés, sur lesquels :
- La figure 1 est une vue schématique en plan d'un four de fusion de charge pourvu d'ensembles de combustion selon l'invention ;
- La figure 2 est une vue schématique en coupe verticale d'un four de fusion de verre équipé d'ensembles de combustion selon l'invention.

Dans la description qui va suivre et sur les dessins, les éléments identiques ou analogues portent les mêmes chiffres de référence, éventuellement indicés.

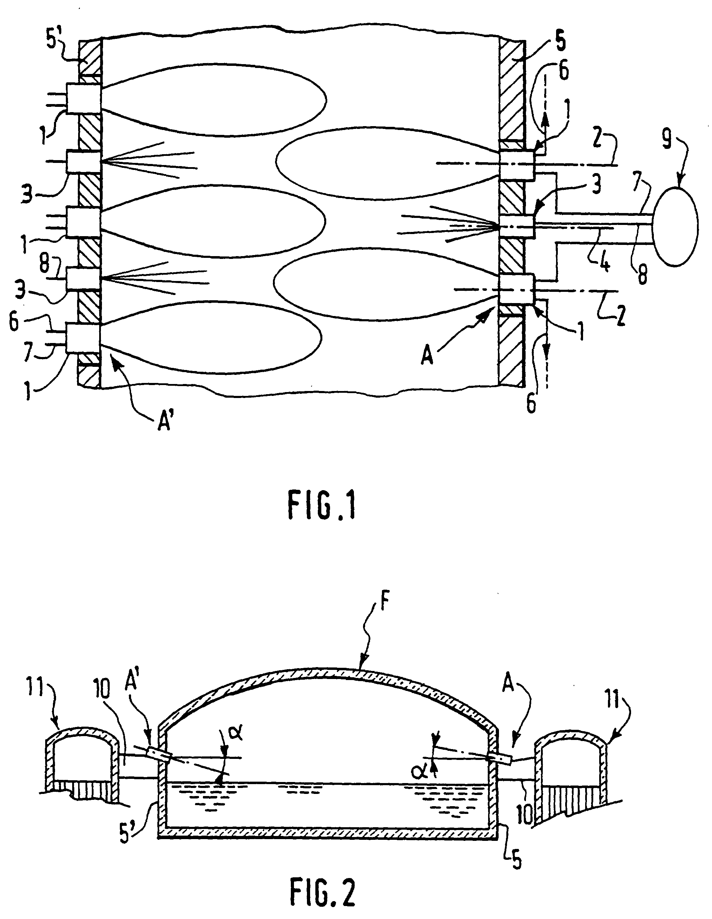

Un ensemble de combustion A selon l'invention comprend au moins une paire d'oxybrûleurs 1 parallèles ayant chacun un axe de brûleur 2 et au moins une lance d'oxydant 3, ayant un axe de lance 4, associée à la paire de brûleurs 1. L'ensemble est monté dans une paroi latérale 5, 5' d'un four de fusion de charge, par exemple un four de fusion de verre, de façon que les axes 2 et 4 soient sensiblement coplanaires, ce plan formant, avec un plan horizontal, un angle α, positif ou négatif, comme représenté sur la figure 2, compris entre -25 et +25°, typiquement entre -20 et +20°. La lance 3 est disposée entre les brûleurs de la paire de brûleurs 1 de façon que son axe 4 soit sensiblement à mi-distance entre les axes 2 des brûleurs et forme éventuellement avec eux un angle latéral inférieur à 10°. L'ensemble de brûleurs peut comporter trois brûleurs 1 et deux lances 3 disposées comme décrit précédemment entre deux brûleurs adjacents constituant, pour chaque lance, une paire de brûleurs, comme représenté pour l'ensemble A' monté dans la paroi de four 5' sur la partie gauche de la figure 1. Selon les dimensions des fours industriels concernés, la distance entre deux brûleurs adjacents 1 d'un ensemble de combustion A, A', est compris entre 0,4 et 2 mètres. Chaque lance 3 comporte avantageusement au moins deux orifices d'éjection de même section formant des jets divergents séparés d'un angle de moins de 20° et situés dans le plan des axes de l'ensemble de combustion.

Chaque brûleur comporte des lignes 6 et 7 d'alimentation, respectivement en combustible et en oxydant, chaque lance 3 étant pourvue d'une ligne 8 d'alimentation en oxydant. Selon un aspect de l'invention, les lignes d'oxydant d'un même ensemble de combustion sont reliées à une même source 9 d'oxydant comprenant au moins 88 %, avantageusement entre 90 et 95 % d'oxygène et constituée typiquement par une unité de séparation de l'air à adsorption du type dit PSA (pour "Pressure Swing Adsorption"). Le combustible est avantageusement sous forme gazeuse, typiquement du gaz naturel, et peut être également constitué par une atomisation de combustible liquide par un gaz tel que l'oxydant ou de la vapeur. Selon un aspect de l'invention, les brûleurs d'un même ensemble de combustion ont les mêmes débits de combustible et d'oxydant, le débit total d'oxydant étant égal au débit théorique nécessaire pour une combustion complète du combustible plus un excès d'oxydant équivalant à une concentration molaire de 0,5 % à 10 % de molécules d'oxygène dans les produits de combustion secs. Dans chaque ensemble de combustion, le débit d'oxydant d'un brûleur n'est pas supérieur à 90 % du débit théorique nécessaire pour une combustion complète du combustible éjecté par ce brûleur.

Un même four peut comporter un ou plusieurs ensembles de combustion selon l'invention dans différentes sections, associés ou non à des aérobrûleurs tels que ceux figurés en 10 et accouplés à des régénérateurs 11 représentés dans le four de verre F de la figure 2. Dans le cas d'un four de verre F, comme représenté sur les figures 1 et 2, les ensembles de combustion A, A' sont disposés en vis-à-vis et sont avantageusement mis en oeuvre en alternance, d'un côté puis de l'autre, à la façon des aérobrûleurs.

## Revendications

1. Procédé pour réaliser une combustion dans un four à l'aide d'au moins une paire de brûleurs (1) oxydant et combustible et au moins une lance (3) d'oxydant disposée entre les brûleurs (1) de ladite au moins une paire, **caractérisé en ce que** les brûleurs (1) de ladite au moins une paire ont les mêmes débits de combustible et d'oxydant, le débit total d'oxydant dans les brûleurs (1) et dans la lance (3) étant égal au débit théorique nécessaire pour une combustion complète du combustible plus un excès d'oxydant équivalent à une concentration molaire de 0.5% à 10% de molécules d'oxygène dans les produits de combustion secs, **en ce que** la distance entre deux axes de brûleurs est comprise entre 0,4m et 2m, **en ce que** l'axe de la lance est situé sensiblement à mi-distance entre les axes brûleurs, **en ce que** l'oxydant est fourni par une source qui comprend au moins 88%, typiquement de 90% à 95% d'oxygène et **en ce que** une même source (9) d'oxydant alimente les lignes d'oxydant de la paire de brûleurs (1) et la lance.

2. Procédé selon la revendication 1, **caractérisé en ce que** le débit d'oxydant d'un brûleur n'est pas supérieur à 90% du débit théorique nécessaire pour une combustion complète du combustible éjecté par ce brûleur.

3. Procédé selon la revendication 1 ou 2, **caractérisé en ce que** l'on dispose plusieurs ensembles de combustion dans différentes sections du four.

4. Procédé selon l'une des revendications 1 à 3, **caractérisé en ce que** l'impulsion de l'oxydant émise par la lance est comprise entre 0,5 et 3 fois l'impulsion de flux d'oxydant et de combustible émis par le brûleur.

5. Procédé selon l'une des revendications 1 à 4, **caractérisé en ce que** l'on dispose des ensembles de brûleur et lance (A, A') en vis-à-vis sur des parois opposées du four, de préférence en alternance.

## Patentansprüche

1. Verfahren zur Durchführung einer Verbrennung in einem Ofen mit Hilfe von mindestens einem Paar von Oxidationsmittel/Brennstoff-Brennern (1) und mindestens einer zwischen den Brennern (1) des mindestens einen Paars angeordneten Oxidationsmittel-Lanze, **dadurch gekennzeichnet, daß** die Brenner (1) des mindestens einen Paars die gleichen Brennstoff- und Oxidationsmittel-Durchsätze aufweisen, wobei der Oxidationsmittel-Gesamtdurchsatz in den Brennern (1) und in der Lanze (3) gleich dem für eine vollständige Verbrennung des Brennstoffs erforderlichen theoretischen Durchsatz plus einem Oxidationsmittelüberschuß, der einer molaren Konzentration von 0,5 bis 10% an Sauerstoffmolekülen in den trockenen Verbrennungsprodukten entspricht, ist, der Abstand zwischen den beiden Achsen der Brenner zwischen 0,4 m und 2 m liegt, die Achse der Lanze weitgehend in der Mitte zwischen den Brennerachsen liegt, das Oxidationmittel von einer Quelle mit einem Sauerstoffgehait von mindestens 88%, in der Regel 90% bis 95%, zugeführt wird, und die Oxidationsmittelleitungen des Paars von Brennern (1) und der Lanze von der gleichen Oxidationsmittelquelle (9) gespeist werden.

2. Verfahren nach Anspruch 1, **dadurch gekennzeichnet, daß** der Oxidationsmitteldurchsatz eines Brenners nicht mehr als 90% des für eine vollständige Verbrennung des von diesem Brenner ausgestoßenen Brennstoffs erforderlichen theoretischen Durchsatzes beträgt.

3. Verfahren nach Anspruch 1 oder 2, **dadurch gekennzeichnet, daß** man in verschiedenen Abschnitten des Ofens mehrere Verbrennungsgruppen anordnet.

4. Verfahren nach einem der Ansprüche 1 bis 3, **dadurch gekennzeichnet, daß** der Impuls des von der Lanze ausgestoßenen Oxidationsmittels zwischen dem 0,5- und 3fachen des Impulses des von dem Brenner ausgestoßenen Oxidationsmittel- und Brennstoffdurchsatzes liegt.

5. Verfahren nach einem der Ansprüche 1 bis 4,
**dadurch gekennzeichnet, daß** man an gegenüberliegenden Wänden des Ofens vorzugsweise alternierend Gruppen aus Brenner und Lanze (A, A') einander gegenüber anordnet.

## Claims

1. Method for carrying out combustion in a furnace by means of at least one pair of oxidant/fuel burners (1) and at least one oxidant lance (3) placed between the burners (1) of the said at least one pair, **characterized in that** the burners (1) of the said at least one pair have the same fuel and oxidant flow rates, the total oxidant flow rate in the burners (1) and in the lance (3) being equal to the theoretical flow rate needed for complete combustion of the fuel plus an excess of oxidant equivalent to a molar concentration of from 0.5% to 10% of oxygen molecules in the dry combustion products, **in that** the distance between two burner axes is between 0.4 m and 2 m, **in that** the lance axis is located approximately mid-distance between the burner axes, **in that** the oxidant is supplied by a source which comprises at least 88%, typically from 90% to 95%, oxygen and **in that** the same oxidant source (9) feeds the oxidant lines of the pair of burners (1) and the lance.

2. Method according to Claim 1, **characterized in that** the oxidant flow rate for a burner is not greater than 90% of the theoretical flow rate needed for complete combustion of the fuel expelled by this burner.

3. Method according to Claim 1 or 2, **characterized in that** several combustion assemblies are placed in various sections of the furnace.

4. Method according to one of Claims 1 to 3, **characterized in that** the momentum of the oxidant output by the lance is between 0.5 and 3 times the momentum of the stream of oxidant and of fuel output by the burner.

5. Method according to one of Claims 1 to 4, **characterized in that** burner/lance assemblies (A, A') are placed facing each other on opposing walls of the furnace, preferably in an alternating configuration.
